# EUROPEAN PATENT APPLICATION

(11) **EP 2 626 155 A1**
(43) Date of publication of application: **14.08.2013**
(21) Application number: 10858199.2
(22) Date of filing: 08.10.2010
(51) Int. Cl.: B22C 7/02, B22C 7/06, B22C 9/04, B22C 9/11, F16K 1/42, B29D 1/00, B29D 22/00, B29K 91/00

(54) **METAL MOLD FOR MANUFACTURING A STRAIGHT WAX BODY FOR A VALVE AND STRAIGHT METAL BODY FOR A VALVE THUS OBTAINED**

(71) Applicant: Faraon Chaul Huerta, Adma Elena, C.P. 11500 México D.F. (MX)
(72) Inventor: Faraon Chaul Huerta, Adma Elena, C.P. 11500 México D.F. (MX)
(74) Representative: Gonzalez-Alberto Rodriguez, Natalia
(86) International application number: PCT/MX2010/000108
(87) International publication number: WO 2012/047080

(57) **Abstract**

The present invention relates to a metal mold for manufacturing a straight wax body for a valve and to the straight metal body thus obtained, said metal mold succeeding in eliminating the traditional concave shape of the ball-type valve body, inside which, and during fluid flow distribution, the flow from the fluid inlet cavity to the fluid distribution cavity causes a flow loss in the direction of the fluid flow outlet via the fluid outlet cavity, thus creating a steep drop in pressure, meaning that by eliminating the concave part of the ball-type valve body and making the fluid inlet, distribution and outlet cavities straight and much wider, a straight valve body is obtained, thus preventing the steep drop in pressure and flow loss. The metal mold in the invention, which uses the lost-wax or ceramic casting process to manufacture the straight wax body for a valve of any design, is constituted starting with a rectangular or square housing that includes an orifice through which the graded wax is introduced at a certain temperature for forming the straight wax body for the valve inside the metal mold.

## Description

### FIELD OF INVENTION

The present invention is generally related with molds used in lost-wax or ceramic casting process, for manufacturing fluid control valves with two or more ways. More particularly, the invention is related to a mold which under above mentioned technique allows obtaining a straight wax body for manufacturing a valve metal straight body preventing a strong pressure drop and flow loss.

### BACKGROUND OF INVENTION

Casting is a metal part production process through metal or molten alloy pouring over a hollow mold which is generally made of sand. Casting involves three different processes: firstly a wood, plastic or metal model with the shape of the finished article is made; then a hollow mold is manufactured surrounding the model with sand and later withdrawing it, and then the molten metal is poured into the mold, this latter process known as casting.

In cases where the number of molten pieces is limited, the model is often made of lacquered wood, but when the number is high it may be of plastic, cast iron, steel, aluminum or another metal. The model presents two significant differences regarding the original one: its dimensions are somehow larger to compensate molten piece contraction when cooled, and hollow object models have projections corresponding to the cores. Although the models may be made in a single piece, it is easier to remove the molten object from the mold when having two or more parts if the shape is complicated. For this reason, straight side object models are often manufactured with a slight recess in their thickness.

Casting is an ancient art still in use, although it has been somewhat replaced by other methods such as pressure casting, forging, extrusion, machining, lamination or lost wax or ceramic casting.

Within the field of application of the invention subject of present patent application, wherein the ball-type valve bodies are mainly used for fluid handling and application, said bodies are obtained under the known process of sand casting, a process which is in search of improvements after several years, resulting as variants thereof the green sand, silicate sand and CO₂ (carbon dioxide) casting processes, and others.

When dealing with the manufacture of ball-type valve bodies under the traditional technique, the features of the sand to be used shall be firstly determined, said sand which is mixed with binders and resins by putting the mixture into the metal or wood molds of ball-type valve body, which is compressed and compacted as much as possible to the ball-type body shape, the used metal or wood mold is later removed thus obtaining the molded cavities of the ball-type body in the sand and a drying procedure is applied for certain time, this being performed in two stages, that is, the mold split by one half; the two halves forming the sand mold are assembled having previously arranged the sand ball-type cores or nucleuses necessary to form the flow inner cavities and which are separately manufactured; molten metal is then poured into the ball-type body sand assembled molds; the molten metal is cooled and then poured into the mold; and finally the sand mold which gave shape to the ball-type body for producing a cast piece is broken.

Experience has demonstrated that the ball-type valve bodies obtained under this method are quality deficient, since each parameter participating in said process is not ever possible to accurately control, an example of this being the quality of molten metal when forming the metal ball-type body generally having pores, this being the result of a poor control in molten metal feed, which in turn limits a smooth and sufficient distribution of molten metal which prevents contractions within the molten body. Another factor which affects final product quality is temperature changes caused by molten metal thermal shocks, sand mold moisture and temperature, those which lead to a molten metal body with cracks and porosities which do not withstand high hydrostatic pressure tests thus demanding more thickness in ball-type valve bodies in order to overcome said cracks and/or porosities, obtaining a bulky, heavy and costly body in addition to an obtained non-polished inner and outer body finish. Moreover, the cost of this process is increased by the same deficiencies in manufacturing sand cores or nucleuses necessary to shape the fluid flow cavities in the used mold, a status which leads not to look at the used casting process but to the elements intervening therein and especially to the casting molds and the obtained models, since they provide a better control of the parameters intervening in the process and consequently they allow to maximize the obtained product quality.

In addition to above referred process for manufacturing a ball-type valve body, the state-of-the-art teachings reveal that there are other procedures to achieve the same result as described below:

US patent 5,016,349, granted on May 21, 1991 to Pekka J. Kivipelto, discloses a method for manufacturing or repairing a ball valve wherein the valve housing is mounted by welding two or more portions around a closed member formed as a part of the ball face and provided with a flow opening, and the closed member rotation axis is attached to the closed member. Prior to installing in place the closed member rotation axis, the closed member is rotated in the housing in such a way that the rotation axis closing point is arranged in front of the first flow conduit in the cover, and the rotation axis is inserted into the closed member through this flow conduit and is attached to the closed member. The closed member end which is arranged apart from the rotation axis is pressed against the sealing surface of the second housing flow conduit, and this sealing face is worked by means of the closed member end, or the end located on the rotation axis side is pulled against the other sealing surface, and this sealing surface is worked by means of the end located on the rotation axis side.

Another technique is found in US patent 5,288,054, granted on February 22, 1994, to Earl A. Bake and Leonard J. Stephens, wherein a ball valve and a method of manufacture thereof is disclosed and protected, which claims particularly a method for manufacturing a ball valve from the following steps: providing a valve body having an inlet conduit, a valve compartment, and an outlet conduit, the valve compartment comprises a shelf surface; putting a resilient ring into said shelf; providing an erosion-resistant hard-material discrete annular valve seat, arranging said annular seat in the resilient ring with the contact seat with an inner compartment wall both upstream and downstream of the resilient ring.

On the other hand, patent MX 224,493, granted in November 26, 2004 to inventors Bogdan Roszkowski and David Chelchowski, discloses and protects an invention related with a valve member for a ball-type valve, including two rigidly attached parts of a body to form a valve member and generally adjusted under pressure over a frame. The two bodies have opposed sealing surfaces and a flow passage extending through the bodies and the frame. The valve member includes means for coupling an actuating mechanism allowing the rotation of the valve mounting, where the valve member may be rotated to present a sealing surface or alternatively rotating to present a flow path to a water supply when the valve member is located in a sealed fluid passage such as a pipeline.

Finally, patent MX 258,807, granted on June 16, 2008 to Irving C. Erickson, et al., titled "balanced ball valve" discloses and protects an invention characterized in that comprises: a valve body defining a flow passage between an inlet and outlet thereof, a valve seat; a balanced plug which may be linearly moved related to a valve seat for regulating a fluid flow through flow pass, the balanced plug has a first end exposed to fluid pressure from the inlet and a sealing end configured to expose a pressure balance surface to the fluid pressure from the inlet when being in sealing coupling with the valve seat; wherein the sealing end of the balanced plug comprises a sealing contact point in the outermost edge of a perimetral wall thereof, and wherein the pressure balance surface is defined between the sealing contact point and the innermost edge of the perimetral wall; and wherein the sealing end of the balanced plug further comprises a background support surface.

It is possible to note from previously referred state of the art that the two first documents identified as American patents are referred to a method for assembling a ball valve, however, both patents take for granted that the valve body is already existing, that is, valve bodies which have been available long ago in market are accepted by both inventions, and none of them proposes a novel or inventive alternative wherefrom the problem represented by traditional and current body valves obtained by the conventional previously detailed sand casting method is solved in the heart of the matter.

Regarding the two Mexican patent documents, it may be established that even when the proposed matter deserves an acknowledgment referred to an initiative to improve ball valve structural features, the inclusion of a valve straight body preventing a strong pressure drop and flow loss is not apparent in any of them, being clear that this omission also results from the fact that current Mexican proposals follow the principle of using traditional valve bodies, that is, those obtained by sand casting, resulting that the fluid flow through a ball-type valve because of its design and body inner and outer shape thereof, as well as the potential differences between upstream sources and downstream destinations where fluid flows are directed when passing within a ball-type body, causes a strong pressure drop and flow loss, being these performance deficiencies caused by its inner ball design, which prevents to be considered as an efficient control in fluid flow, forcing a change in the available flow area from zero to a maximum, in order thus to change the flow resistance, which consequently frequently causes a need of use of valves of larger diameter than pipeline.

In the light of above, and since above referred teachings of the state of the art are not sufficient for overcoming the originally stated problems as to the deficiencies of current valve bodies, the present invention firstly proposes a novel and innovative metal mold for manufacturing a straight wax body from the lost-wax or ceramic casting process, wherein said mold does not require soluble wax cores or nucleuses, since these are replaced in the proposed mold by using removable metal straight cores or nucleuses, while the second proposal included in this application comprises a metal straight body for valve obtained from previously referred straight wax body in combination with other ancillary elements such as bushings and flanges, and whereby a strong pressure drop and handled fluid flow loss is prevented, an invention which intends the following:

### OBJECTS OF THE INVENTION

One objective of present invention is to provide a metal mold for manufacturing a straight wax body for a two- or more way valve from the lost-wax or ceramic casting process.

Another objective of present invention is to provide a metal mold for manufacturing a straight wax body for valve, which installs removable metal straight cores or nucleuses to shape the flow cavities instead of soluble wax nucleuses or cores which are commonly used in the lost-wax or ceramic casting process.

Another objective of present invention, is to provide a metal mold for manufacturing a straight wax body for a two- or more way valve, whereby a metal straight body with threaded, weldable connection or flange connection may be obtained.

Another objective of present invention is to provide a metal mold for manufacturing a Y-type or angular wax body for a two- or more way valve, whereby a metal Y-type or angular body with threaded, weldable connection or flange connection may be obtained.

Another objective of present invention is to provide a metal straight body for a two- or more way valve preventing a strong pressure drop and flow loss, and being produced from the straight wax body obtained from the proposed mold.

Still another objective of present invention is to provide a metal Y-type or angular body for a two- or more way valve, preventing a strong pressure drop and flow loss, and which is produced from a Y-type or angular wax body for a two- or more way valve, obtained from proposed mold.

### BRIEF DESCRIPTION OF THE INVENTION

The present invention refers to a novel metal mold whereby a straight wax body is possible to obtain under the lost-wax or ceramic casting process, which in turn allows producing a metal straight body for valve preventing strong pressure drop and flow loss, which fully replaces to ball-type body valves.

An advantage of the proposed metal mold for obtaining a valve straight wax body is that it allows to install removable metal nucleuses or cores with their assembled guides replacing the soluble wax nucleuses or cores which are used in the lost-wax or ceramic casting process, and which are almost indispensable for manufacturing pieces in this kind of casting process.

Another advantage of the proposed mold is that once that the originally defined structural arrangement is observed, the dimensions and shape of said mold may be modified in order to be capable of producing several types of wax bodies for valve, such as those of Y-type and angle body, wherein the strong pressure drop and loss of fluid flow being handled is prevented regardless of shapes and dimensions.

Other features and advantages of present invention will be more clear and apparent from the detailed description of the invention and the attached drawings of illustrative but not limitative nature which are presented below.

### BRIEF DESCRIPTION OF THE FIGURES

Figure 1, depicts a metal mold longitudinal section for producing a two-way valve straight wax body under the lost-wax or ceramic casting process, performed in accordance with the present invention, wherein removable metal straight nucleuses or cores to shape the fluid inlet, distribution, and outlet cavities may be observed;
Figure 2, depicts a two-way valve straight wax body longitudinal section, obtained from the mold of figure 1, wherein fluid inlet and outlet cavities are observed, formed by the nucleuses or cores;
Figure 3, depicts a wax bushing longitudinal section which are implanted in the straight body of figure 2 to form a desired weldable or threaded connection;
Figure 4, depicts an upper layout view of a wax square flange, which is installed in the straight body of figure 2, and having some holes which are used for fastening the molten and machined support or bonnet to the molten straight body,;
Figure 5, depicts a straight body longitudinal section of figure 2, having assembled the fluid inlet and fluid outlet bushings of figure 3;
Figure 6, depicts a straight body longitudinal section of figure 5, further including the flange of figure 4;
Figure 7, depicts a longitudinal section of a metal straight body molten by the lost-wax or ceramic casting process with the molten and assembled bushings of figure 3 for manufacturing a valve straight body with threaded or weldable connection;
Figure 8, depicts a metal straight body longitudinal section of figure 7, which has further assembled the flange of figure 4 for fastening of the body to the valve support or bonnet;
Figure 9, depicts the metal straight body of figure 7 with machined threads to obtain a straight body for threaded valve;
Figure 10, depicts a longitudinal section of a metal straight body molten for a threaded connection valve body and with a machined flange and its holes for fastening of support or bonnet to the valve body;
Figure 11, depicts a longitudinal section of some wax flanges having extensions which are introduced into the body fluid inlet and outlet cavities of figure 2;
Figure 12, depicts a valve straight wax body longitudinal section of figure 2, when the wax flanges of figure 11 have been included;
Figure 13, depicts a straight body longitudinal section of figure 12, further including the wax flange of figure 4 for fastening of the support or bonnet to the body;
Figure 14, depicts a longitudinal section of a molten valve metal straight body having included some flanges for fastening of the valve to the pipeline;
Figure 15, depicts a metal straight body longitudinal section of figure 14, further comprising a square or round flange for fastening of the support or bonnet to the body;
Figure 16, depicts a longitudinal section of a first embodiment of the body of figure 2, which may include the bushings of figure 3, the flange of figure 4 and the flanges of figure 11;
Figure 17, depicts a longitudinal section of a second embodiment of the body of figure 2, which may include the bushings of figure 3, the flange of figure 4 and the flanges of figure 11; and
Figure 18, depicts a longitudinal section of a third embodiment of the body of figure 2, which may include the bushings of figure 3, the flange of figure 4 and the flanges of figure 11.

### DETAILED DESCRIPTION OF THE INVENTION

The present invention consists of a metal mold 1000 for manufacturing a valve straight wax body 1500 and the obtained metal straight body 1600, achieving with said metal mold 1000 a removal of the traditional concave shape of the ball-type valve body, which in its inner part and during the fluid flow distribution when passing the flow from the fluid inlet cavity to the fluid distribution cavity, causes in its path a flow loss towards the fluid flow outlet by the fluid outlet cavity, thus promoting a strong pressure drop, therefore by removing the ball-type valve body concave part and achieving that cavities for fluid inlet, distribution and outlet are straight and much more wider, a valve straight body is configured which prevents the strong pressure drop and flow loss.

Proposed metal mold 1000 operated under the lost-wax or ceramic casting process for manufacturing a straight wax body 1500 for valve of any design, is assembled from a rectangular or square box comprising a hole (not illustrated) whereby the selected wax is introduced at a certain temperature to shape the straight wax body 1500 for valve within the metal mold 1000.

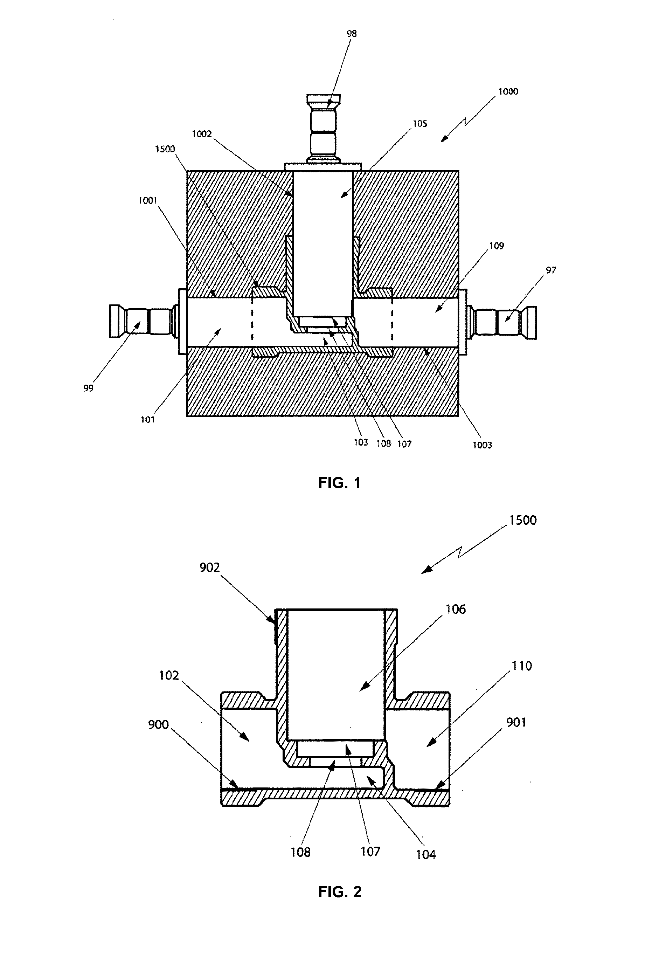

According to that illustrated in figure 1, the metal mold 1000 subject of present patent application, is configured from: a first cavity 1001 disposed on the low-medium part of the metal mold 1000 left side end, and being extended in a rectilinear path from said left side end up to beyond the metal mold vertical symmetry axis 1000, defining this cavity 1001 the access path of a first metal straight removable nucleus or core 101; a second cavity 1002 disposed over the metal mold vertical symmetry axis 1000, which is extended from the upper end and perpendicularly to the first cavity 1001 path until coming up against said first cavity 1001, this second cavity 1002 serving to define the path of a second metal straight removable core or nucleus 105; and of a third cavity 1003 disposed in the low-medium part of the metal mold right side end 1000, which is extended in the same direction and orientation of the first cavity 1001 but in an opposite side, that is, being projected from the metal mold right side end 1000 and until shortly before its vertical symmetry axis, just when intersected with the second cavity 1002, the access path being defined from the third cavity 1003 of a third metal straight removable nucleus or core 109.

As it may be noticed from figures 1 to 15, the first metal straight removable nucleus or core 101 which is introduced into the first cavity 1001, is formed from a main cylindrical body which first end is coupled with a handle element 99 allowing an easy handling when is introduced into the cavity 1001 or when removed therefrom, and showing in the final end lower part a round projection 103 which is characterized by being of a lower diameter than the main body diameter of said first removable core or nucleus 101, such that said first core 101 prints into the intended straight wax body 1500 intended the following arrangement, a first fluid inlet cavity 102 having a guide 900 for receiving an guiding a bushing for the intended weldable or threaded connection 301 or a wax flange 500, further showing said straight wax body 1500 a fluid distribution bottom chamber 104 because of the projection 103 from core 101.

Regarding to the second metal straight removable core or nucleus 105 introduced into the second cavity 1002, this is formed from a main cylindrical body which first end is coupled with a handle element 98 allowing an easy handling when is introduced into the cavity 1002 or when removed thereof, and showing in its final end a second section 107 of a smaller diameter than the core main body 105 and a third section 108 of a smaller diameter than section 107, thus with this second core 105 arrangement, the passage and fluid distribution inner cavities 106 are formed in the straight wax body 1500, with a guide 902 allowing to align a wax flange 400 which may be of round or square shape, for fastening with it the molten and machined support or bonnet to the molten straight body. Particularly, the guide 402 of the flange 400 is introduced into the guide 902 and fastening of the straight body is assisted by four holes 403 present in the flange 400.

Lastly, the third metal straight removable nucleus or core 109 which is introduced into the third cavity 1003, is formed from a main cylindrical body which first end is coupled with a handle element 97 allowing an easy handling when is introduced into the cavity 1003 or when removed thereof, and which presents an arrangement in its final end through which is formed the fluid outlet cavity 110 in the straight wax body 1500 having a guide 901 for receiving and guiding a bushing for the intended weldable or threaded connection 302 or a wax flange 501.

With above described arrangement of the metal removable cores or nucleuses 101, 105 and 109 being an integral part of the metal mold 1000, a straight wax body 1500 for valve is possible to be obtained, which in turn allows obtaining a metal straight body 1600 for valve, wherein fluids after entering into cavity 102 pass to the bottom chamber 104, then through the third section 108 of core 105 they pass through the second section 107 thereof to the fluid inner distribution chamber 106 and finally the fluids pass to the fluid outlet cavity 110.

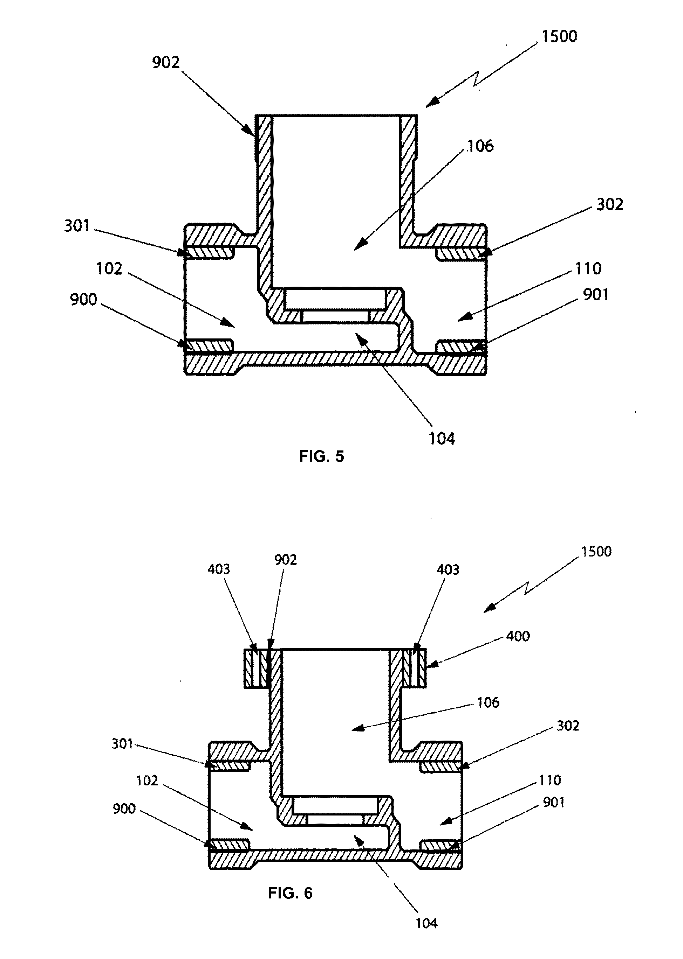

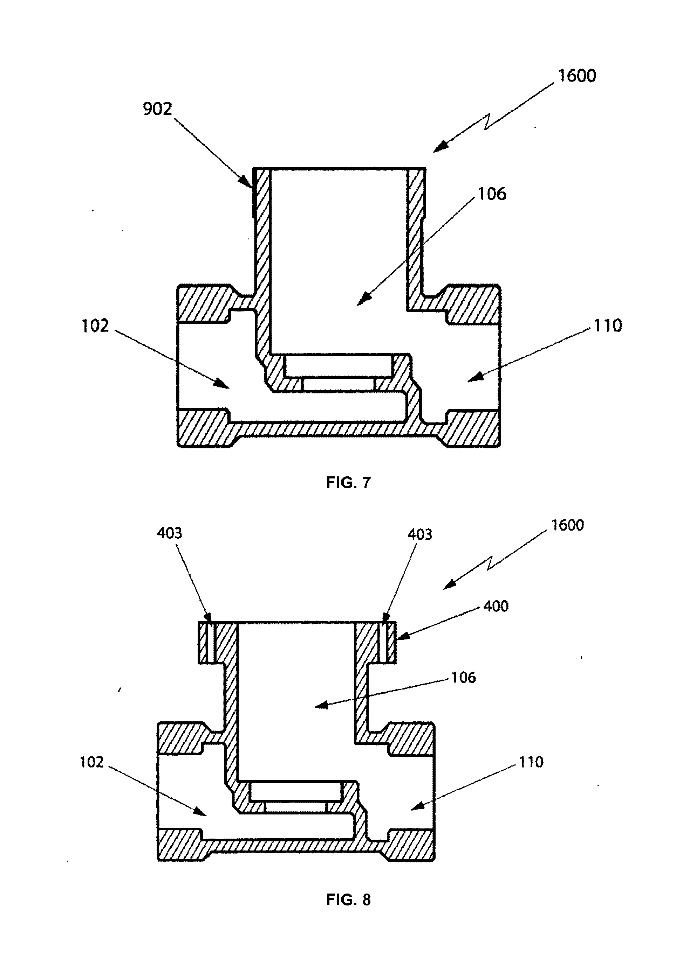

As appreciated in detail from figures 5 and 6 once the valve straight wax body 1500 of mold 1000 is obtained, the wax bushings 301 and 302 are installed which are aligned in respect of the horizontal axis of said straight wax body 1500 by action of guides 900 and 901, thus a molten metal straight body 1600 in the lost-wax or ceramic casting process as appreciated in figure 7 may be obtained, having included and molten the bushings 301 and 302 for manufacturing a valve with weldable or threaded connection. Furthermore, the wax square flange 400 is incorporated in the valve straight wax body 1500 in its working position by the guide 902 of the straight body 1500 with the guide 402 of the flange 400, that above so the wax flange 400 is aligned in respect of the straight wax body 1500 horizontal axis, thus obtaining a metal straight body 1600 molten in the lost-wax or ceramic casting process as that appreciated in figure 8 which has integrated and molten bushings 301 and 302 and the flange 400 having holes 403 for fastening of the support or bonnet to the valve body.

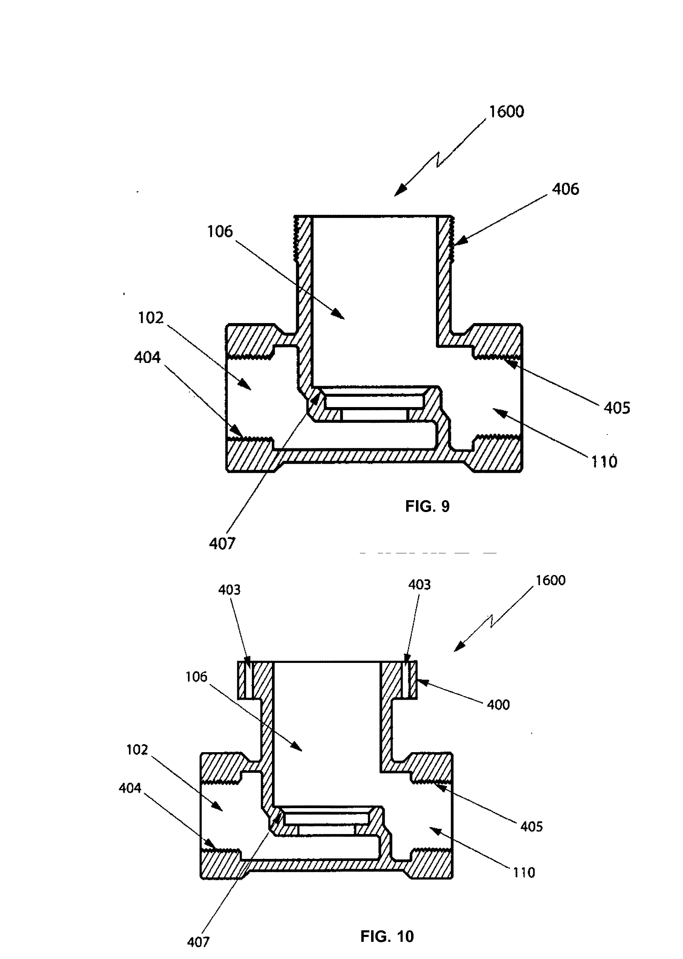

In a preferred embodiment of present invention, figure 9 shows the metal straight body 1600 molten in the lost-wax or ceramic casting process which is previously illustrated in figure 7, wherein both the inlet cavity 102 and outlet cavity 110 have own threads 404 and 405 machined therein according to standards, and thread 406 for fastening of the support or bonnet has been also machined, also showing a seat 407 machined according to the plug type intended to be used.

In another preferred embodiment of present invention, figure 10 depicts the metal straight body 1600 molten in the lost-wax or ceramic casting process which is previously illustrated in figure 8, wherein both the inlet cavity 102 and outlet cavity 110 have own threads 404 and 405 machined therein for a threaded connection valve according to standards, having further machined the flange 400 having holes 403 for fastening of support or bonnet to the valve body, and also having a seat 407 machined according to the type of plug intended to be used.

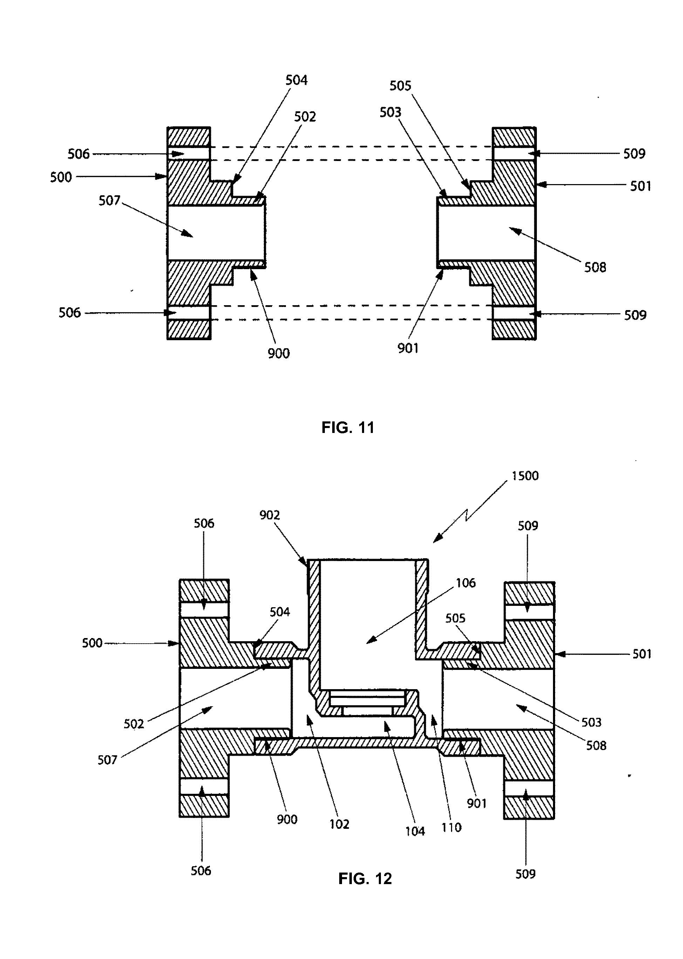

On the other hand, the wax flanges 500 and 501 illustrated in figure 11 and which may be respectively introduced into the inlet cavity 102 and into the outlet cavity 110 of straight wax body 1500 in replacement of the bushings 301 and 302, thus achieving a flange connection, comprise independently a round body with a central hole 507 and 508, wherein said round body is assembled from the three sections which gradually decrease their diameter length so that the latter is lower in diameter than prior section and this in turn is lower than the main one, thus under this beginning the lower diameter sections are identified as extension elements 502 and 503 which are respectively introduced into the fluid inlet cavity 102 of the straight wax body 1500 and into the fluid outlet cavity 110 of said straight body 1500; in order to achieve that above, the wax flanges 500 and 501 comprise guides 900 and 901 which when introduced into the fluid inlet 102 and outlet 110 cavities, the wax flanges 500 and 501 are centered and aligned in respect of the body horizontal axis 1500, since when flanges 500 and 501 are centered in respect of said horizontal axis, the holes 506 and 509 of flanges 500 and 501 which shall be used for fastening of valve to pipeline are also centered and aligned. Guides 502 and 503 are introduced up to the established limit by blocks 504 and 505 defining the end of the second section respectively comprising each of the flanges 500 and 501 to keep always a uniform distance between flange faces.

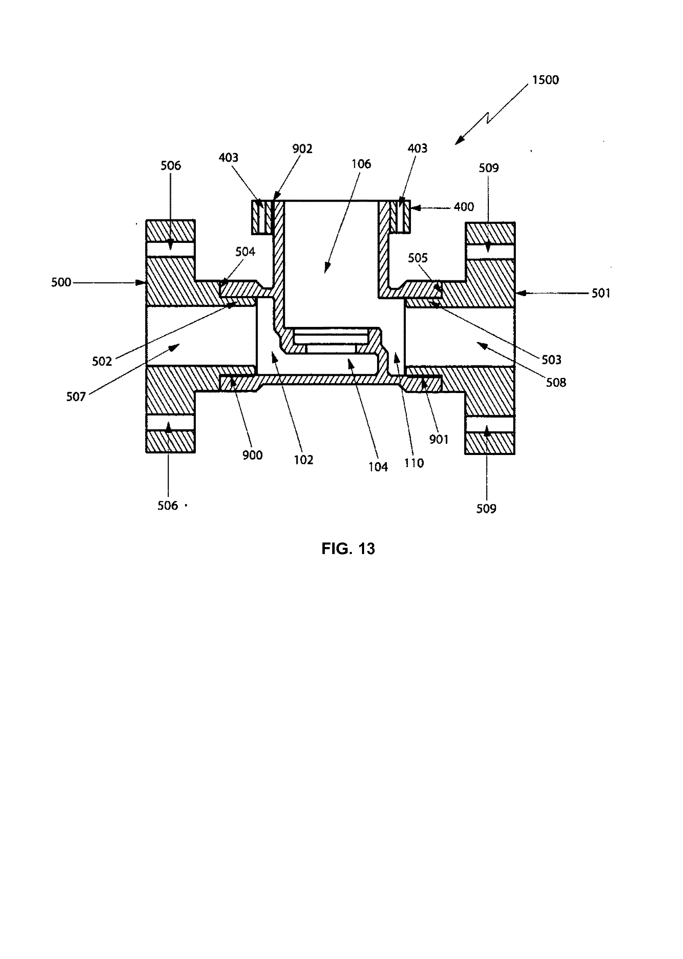

In figure 12 attached to present disclosure is possible to see in detail how the flanges 500 and 501 are disposed respectively towards inner fluid inlet cavity 102 and fluid outlet 110 of the straight wax body 1500, when intended to obtain a metal straight body 1600 through which fastening of valve to the pipeline is performed through flanges. On the other hand, figure 13 represents again the figure 12 arrangement except that in this new arrangement the flange 400 has been included for fastening of support or bonnet to the valve body.

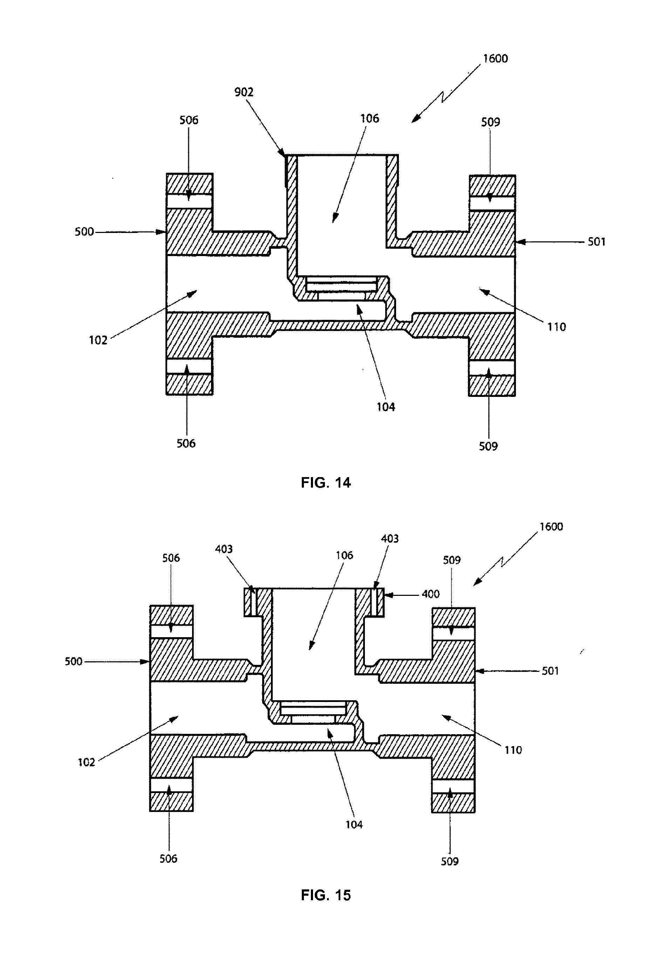

Resulting from above shown arrangements in figures 12 and 13, it is the molten metal straight body 1600 under the lost-wax or ceramic casting process illustrated in figure 14, having flanges 500 and 501 with holes 506 and 509 aligned for fastening of the valve to the pipeline, and the molten metal straight body 1600 under the lost-wax or ceramic casting process illustrated in figure 15 which in addition to the flanges 500 and 501 with holes 506 and 509, also has the flange 400 for fastening of the support or bonnet.

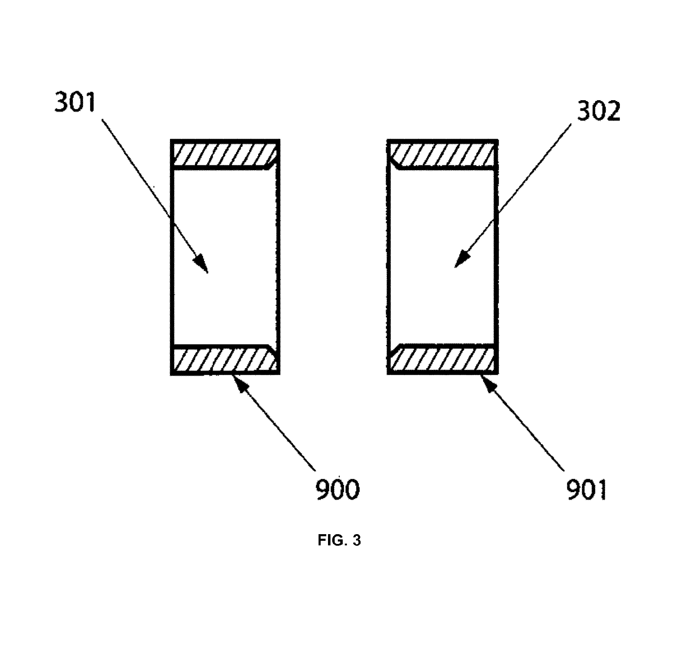

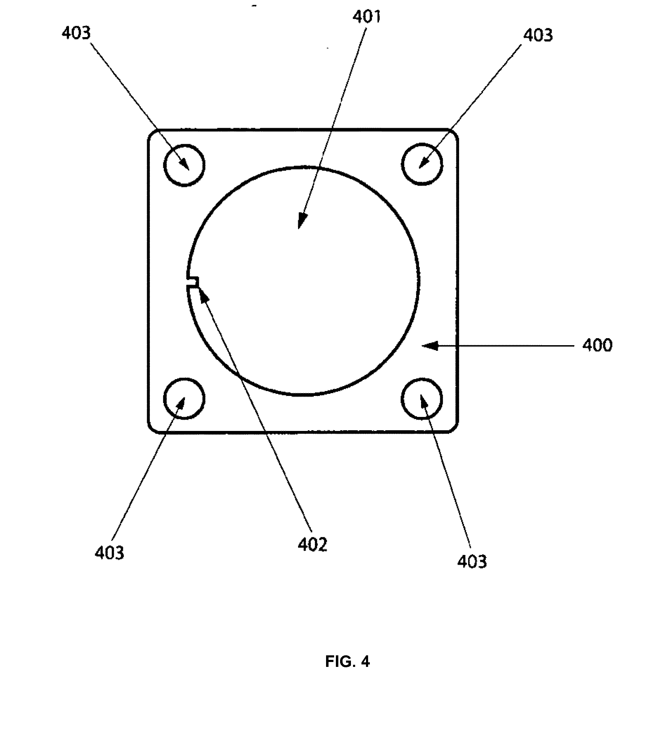

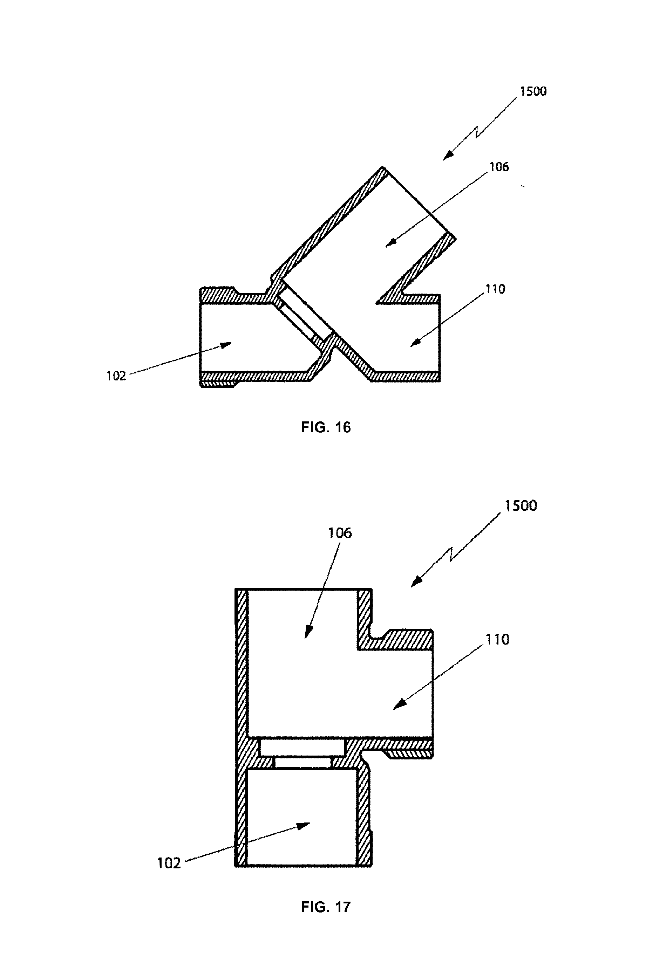

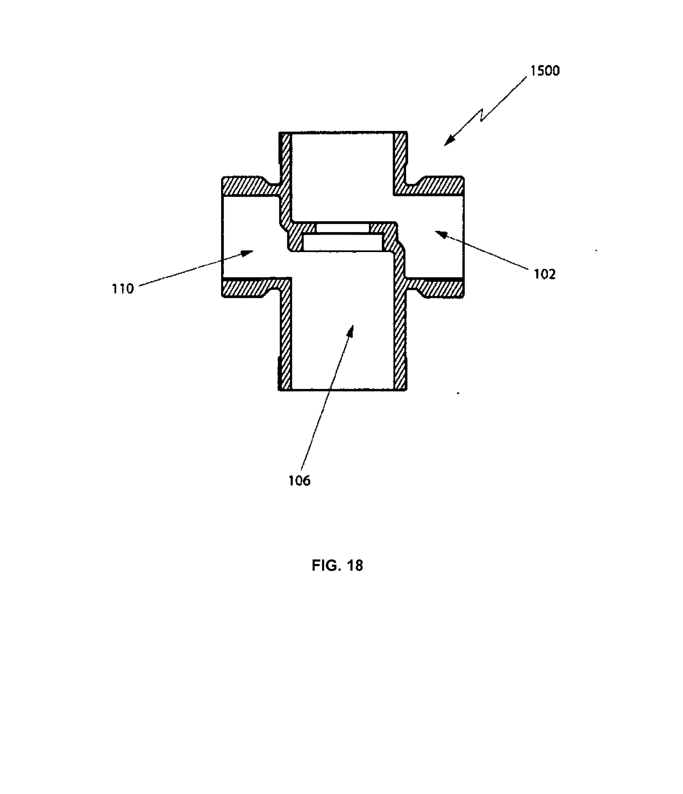

Once that the technical features which make the invention subject of present application a novel, inventive creation being susceptible of industrial application have been fully described along this chapter, it is worth to point out that scope of said invention as to the forms and dimensions shall be understood without any limitation, since the presented description and illustrations have been performed within the broadest possible context, but it would be quite complex to intend to explain every and each of the variants which may be achieved with the proposed metal mold, the obtained wax body and consequently the produced metal body. Exemplary of that above, the embodiments illustrated in figures 16 to 18 of the valve straight wax body where bushings of figure 3, the flange of figure 4 and the flanges of figure 11 may be included, and consequently would allow to obtain metal bodies which are different in shape to those previously illustrated and referred to, but similar as to their structural arrangement, further forcing to the corresponding modifications in the metal mold wherefrom the wax bodies are obtained.

## Claims

1. A metal mold for manufacturing a valve straight wax body of the type used in the lost-wax or ceramic casting process, which is assembled from a rectangular or square box comprising a hole whereby the selected wax is introduced at a certain temperature, **characterized in that**; said mold comprises a first cavity disposed on the low-medium part of its left side end, extended in a rectilinear path from said left side end until beyond the metal mold vertical symmetry axis, a first metal straight removable nucleus or core being housed in this cavity, this first core showing in its final end bottom part a round projection of lower diameter than the main body diameter of said first core, such that this first core forms in the straight wax body a first fluid inlet cavity with a guide and a bottom distribution chamber; a second cavity disposed over its vertical symmetry axis which is extended from the upper end and perpendicularly to the first cavity path until coming up against said first cavity, and housing inside a second metal straight removable core or nucleus, wherein said second core presents in its final end a second section of smaller diameter than the core main body and a third section of smaller diameter than the second section, achieving with this arrangement to shape the fluid pass and distribution inner cavities in the straight wax body, with a guide; and a third cavity disposed in the low-medium part of its right side end, which is extended in the same direction and orientation than the first cavity but in an opposite side, that is, projected from the metal mold right side end and until shortly before its vertical symmetry axis, just when intersecting the second cavity, being housed towards the inner part of this third cavity a third metal straight removable nucleus or core showing in its final end an arrangement through which a fluid outlet cavity having a guide in the straight wax body is formed.

2. The metal mold for manufacturing a valve straight wax body according to claim 1, **characterized in that**; the first, second and third metal straight removable nucleuses or cores disposed on the own cavities of the metal mold, are each coupled in their first end to a handle element allowing an easy handling when is introduced into the corresponding cavity or when removed thereof.

3. A valve straight wax body obtained from the mold of claims 1 and 2, **characterized in that**; the guide of the first fluid inlet cavity is used for receiving and guiding a bushing for the intended weldable or threaded connection or a wax flange.

4. The valve straight wax body according to claim 3, **characterized in that** the guide of the fluid passage and distribution inner cavities allows an alignment of a wax flange to fasten therewith the molten and machined support or bonnet to the molten straight body.

5. The valve straight wax body according to claim 4, **characterized in that** the wax flange may be round or square.

6. The valve straight wax body according to claim 3, **characterized in that** the guide of the fluid outlet cavity allows receiving and guiding a bushing for the intended weldable or threaded connection or a wax flange.

7. The valve straight wax body according to claim 3, **characterized in that** the wax flange disposed both in the inlet cavity and outlet cavity of said body comprises a round body with a central hole, wherein said round body is comprised from the three sections which gradually decrease their diameter length such that the latter is lower in diameter than the prior section and this in turn is lower than the main section.

8. A metal straight body for valve which is obtained from the straight wax body of claim 3, **characterized in that** presents both in the fluid inlet cavity and in the fluid outlet cavity, a molten bushing allowing a threaded or weldable connection.

9. A metal straight body for valve obtained from the straight wax body of claim 3, **characterized in that** presents both in the fluid inlet cavity and in the fluid outlet cavity a flange allowing a valve to pipeline connection by means of flanges.

10. A metal straight body for valve obtained from the straight wax body of claim 3, **characterized in that** comprises a flange having holes for support or bonnet fastening to the valve body.

11. A metal straight body for valve obtained from the straight wax body of claim 3, **characterized in that** comprises a thread for support or bonnet fastening.

12. A metal straight body for valve obtained from the straight wax body of claim 3, **characterized in that** comprises a machined seat according to the type of plug intended to be used.

13. A metal straight body for valve obtained from the straight wax body of claim 3, **characterized in that** its outer shape varies in function of the outer arrangement of the straight wax body whereby is obtained.
